## Europäisches Patentamt
## European Patent Office
## Office européen des brevets

(19)

(11) Veröffentlichungsnummer: **0 154 783**
**B1**

(12) **EUROPÄISCHE PATENTSCHRIFT**

(45) Veröffentlichungstag der Patentschrift:
08.04.87

(51) Int. Cl.⁴: **B 28 B 11/00,** B 23 B 5/44

(21) Anmeldenummer: **85100827.6**

(22) Anmeldetag: **28.01.85**

(54) **Maschine zum Drehen unrunder Geschirrteile.**

(30) Priorität: **26.01.84 IT 4760084**

(43) Veröffentlichungstag der Anmeldung:
**18.09.85 Patentblatt 85/38**

(45) Bekanntmachung des Hinweises auf die Patenterteilung:
**08.04.87 Patentblatt 87/15**

(84) Benannte Vertragsstaaten:
**DE FR GB IT**

(56) Entgegenhaltungen:
**EP-A-0 018 171
CH-A-572 777
DE-B-1 031 084**

(73) Patentinhaber: **Gebrüder Netzsch Maschinenfabrik GmbH & Co, Gebrüder- Netzsch- Strasse 19, D-8672 Selb (DE)**

(72) Erfinder: **Riganelli, Sergio, Civitacastellana, Viterbo (IT)**
Erfinder: **Wegmann, Andreas Reinhard, Via Pasteur 12, I-37135 Verona (IT)**
Erfinder: **Pesavento, Renzo, Via XXIV Giugno 28/c, I-37139 Verona (IT)**

(74) Vertreter: **Wuesthoff, Franz, Dr.- Ing., Patentanwälte Wuesthoff -v. Pechmann- Behrens- Goetz Schweigerstrasse 2, D-8000 München 90 (DE)**

## Beschreibung

Die Erfindung betrifft eine Maschine zum Drehen unrunder Geschirrteile mit

- einem Werkstückträger, der um seine Achse drehantreibbar und zum Aufnehmen eines Werkstücks ausgebildet ist,
- einem Formgebungskopf, der um seine Achse drehbar an einem Werkzeugständer gelagert und an das Werkstück auf dem Werkstückträger andrückbar ist, und
- einer Getriebeanordnung zum Erzeugen einer Relativbewegung zwischen Werkstückträger und Formgebungskopf, die im wesentlichen radial zur Achse des Werkstückträgers hin- und hergeht und mit dessen Drehung entsprechend dem Umriß des Werkstücks abgestimmt ist.

Eine bekannte Maschine dieser Gattung (EP-A 0 018 171), die zum Drehen ovaler Schüsseln ausgebildet ist, weist zwei Werkstückträger auf, die von je einer senkrechten Welle über einen Exzentertrieb derart antreibbar sind, daß sie sich je um ihre eigene senkrechte Achse drehen, während diese eine Planetenbewegung um die geometrische Achse der zugehörigen Welle ausführt. Jedem der Werkstückträger ist ein Formgebungskopf zugeordnet, der um seine eigene Achse drehbar an einem Ausleger gelagert ist, welcher an einem Basisteil eines Werkzeugständers um eine waagerechte Achse kippbar ist. Einer der beiden exzentrisch antreibbaren Werkstückträger samt zugehörigem Formgebungskopf ist zum Vorformen, der andere Werkstückträger samt zugehörigem Formgebungskopf zum Fertigformen der ovalen Schüsseln vorgesehen. Durch das Kippen jedes Formgebungskopfes im Bezug auf den zugehörigen Werkstückträger soll, wie auch beim Drehen runder Geschirrteile üblich, die keramische Masse eines auf den Werkstückträger aufgelegten Massebatzens bzw. vorgeformten Werkstücks allmählich nach außen gedrängt werden, damit nach einem im wesentlichen ebenen mittleren Bereich ein ringförmiger Fuß sowie ein äußerer Randbereich des entstehenden Geschirrteils ausgeformt werden. Zum Ausformen des Fußes ist am Formgebungskopf eine ringförmige Rille ausgebildet.

Ovale Geschirrteile, die auf der bekannten Maschine gedreht worden sind, haben die Tendenz, sich beim Brennen zu verziehen und/oder an ihrem Fuß einzureißen. Diese Tendenz ist umso größer, je stärker der Umriß der Geschirrteile von einer Kreisform abweicht und je höher der Fuß ist. Die Erfindung beruht auf der Erkenntnis, daß diese unerwünschten Tendenzen auf beim Drehen entstehende Ungleichmäßigkeiten der Massestruktur zurückzuführen sind. Die bekannte zweistufige Ausformung der Geschirrteile kann deren Tendenz zum Verziehen und/oder Reißen zwar mildern aber nicht ganz beseitigen; außerdem ist es zeitraubend, die Werkstücke nacheinander mit zwei verschiedenen Formgebungsköpfen zu bearbeiten.

Der Erfindung liegt deshalb die Aufgabe zugrunde, eine Maschine der eingangs beschriebenen Gattung derart weiterzubilden, daß auf ihr ovale oder andere unrunde, beispielsweise abgerundet quadratische, rechteckige oder sechseckige Geschirrteile, mit geringem Zeitaufwand gedreht werden können und solche Geschirrteile in mindestens annähernd gleichem Maß einwandfrei sind wie in üblicher Weise gedrehte runde Geschirrteile.

Die Aufgabe ist erfindungsgemäß dadurch gelöst, daß der Werkzeugständer in einer zur Achse des Werkstückträgers zumindest annähernd normalen Ebene pendelnd beweglich und derart abgestimmt mit der im wesentlichen radial hin- und hergehenden Relativbewegung antreibbar ist, daß die Achse des Formgebungskopfes eine im Bereich von dessen Einwirkung auf das Werkstück an dieses gelegte Tangente zumindest annähernd rechtwinklig kreuzt.

Damit wird erreicht, daß beliebige unrunde, insbesondere ovale Geschirrteile in allen ihren Bereichen, unabhängig von deren Zentrumsabstand, gleichmäßig ausgeformt werden und daß vor allem an den besonders kritischen Übergängen zwischen zentrumsnahen und zentrumsfernen Bereichen jegliches Verquetschen empfindlicher Teile, besonders hoher ringförmiger Füsse vermieden wird.

Bei einer bevorzugten Ausführungsform der Erfindung ist der Werkzeugständer an einem Koppelglied befestigt, das einerseits mit einem Kurbelzapfen der genannten Getriebeanordnung und andererseits mit einem Achszapfen gelenkig verbunden ist, wobei diese beiden Zapfen zur Achse des Werkstückträgers mindestens annähernd parallel sind.

Diese Ausführungsform kann dadurch weitergebildet sein, daß Kurbelzapfen und Achszapfen im rechten Winkel zu ihrer Achsrichtung einstellbar sind.

Die Einstellbarkeit kann sich beispielsweise dadurch ergeben, daß Kurbelzapfen und Achszapfen mittels je eines diametral verstellbaren Schlittens an je einer Steuerscheibe befestigt sind und durch die genannte Getriebeanordnung im Übersetzungsverhältnis 1: 1 miteinander verbunden sind.

Zum Drehen ovaler Geschirrteile ist die oben beschriebene Ausführungsform der Erfindung mit Kurbelzapfen derart ausgestaltet, daß die Getriebeanordnung zwischen Werkstückträger und Kurbelzapfen ein Übersetzungsverhältnis 1 : 2 aufweist. Dies bedeutet, daß bei jeder Umdrehung des Werkstückträgers der Kurbelzapfen zwei Umdrehungen ausführt.

Ausführungsbeispiele der Erfindung werden im folgenden anhand schematischer Zeichnungen mit weiteren Einzelheiten erläutert. Es zeigt:

Fig. 1 eine erste Ausführungsform einer erfindungsgemäßen Maschine in Seitenansicht und teilweise als Schnitt in der senkrechten Ebene I-I in Fig. 2,

Fig. 2 die zu Fig. 1 gehörige Draufsicht,

Fig. 3 eine ähnliche, jedoch in einer anderen Betriebsstellung der Maschine und teilweise als Schnitt in der waagerechten Ebene III-III in Fig. 1 gezeichnete Draufsicht,

Fig. 4 eine entsprechende Draufsicht in einer weiteren Betriebsstellung,

Fig. 5 den Schnitt in der waagerechten Ebene V-V in Fig.1,

Fig. 6. eine Seitenansicht einer zweiten Ausführungsform einer erfindungsgemäßen Maschine,

Fig. 7 eine entsprechende Seitenansicht einer dritten Ausführungsform einer erfindungsgemäßen Maschine und

Fig. 8 eine Teildraufsicht in Richtung des Pfeils VIII in Fig. 7.

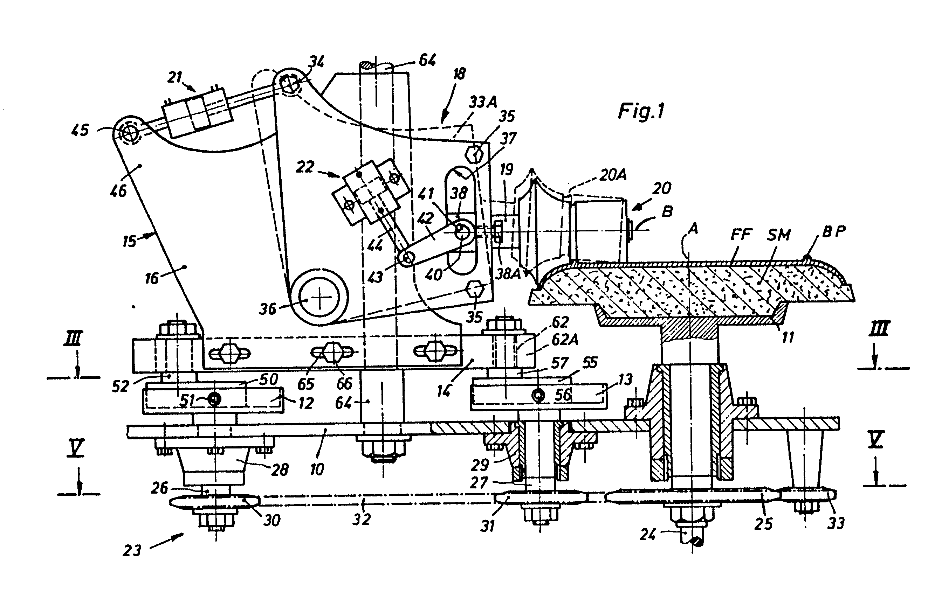

Die in Fig. 1 bis 5 dargestellte Maschine ist dazu vorgesehen, auf einer porösen Form SM mit ihrer Oberseite nach unten liegende ovale schalenförmige Geschirrteile FF aus keramischer Masse zu drehen. Die Maschine hat ein Maschinengestell 10, an dem ein die poröse Form SM aufnehmender Werkstückträger 11 sowie eine hintere und eine vordere Steuerscheibe 12 bzw. 13 im Abstand voneinander um je eine senkrechte Achse drehbar gelagert sind. Die Drehachsen des Werkstückträgers 11 und der beiden Steuerscheiben 12 und 13 liegen in einer gemeinsamen senkrechten Ebene. Die beiden Steuerscheiben 12 und 13 sind miteinander durch ein Koppelglied 14 verbunden, das in einer waagerechten Ebene beweglich ist und einen Werkzeugständer 15 trägt.

Der Werkzeugständer 15 besteht im wesentlichen aus einem Basisteil 16, das am Koppelglied 14 befestigt ist, und einem Ausleger 18, der in Bezug auf eine gemeinsame senkrechte Mittelebene des Basisteils 16 und des Auslegers 18 kippbar ist. Am Ausleger 18 ist eine Werkzeugspindel 19 in der genannten Ebene kippbar gelagert; auf ihr ist ein Formgebungskopf 20 gelagert. Zum Kippen des Auslegers 18 in Bezug auf das Basisteil 16 ist eine erste pneumatische Kolben-Zylinder-Einheit 21 vorgesehen; eine zweite pneumatische Kolben-Zylinder-Einheit 22 dient zum Kippen der Werkzeugspindel 19 in Bezug auf den Ausleger 18.

Der Werkstückträger 11 ist mit dem Werkzeugständer 15 durch eine Getriebeanordnung 23 verbunden. Zu dieser gehört eine senkrechte Werkstückspindel 24, an der oben der Werkstückträger 11 und unterhalb des dargestellten plattenförmigen Teils des Maschinengestells 10 ein Zahnrad 25 befestigt ist. Weiter unten ist mit der Werkzeugspindel 19 ein nicht dargestellter Antriebsmotor für die Getriebeanordnung 23 gekuppelt.

Die beiden Steuerscheiben 12 und 13 sind am oberen Ende je einer Steuerwelle 26 bzw. 27 befestigt, die in einem Lager 28 bzw. 29 am Maschinengestell 10 gelagert und an ihrem unteren Ende mit einem Ritzel 30 bzw. 31 fest verbunden ist. Die beiden Ritzel 30 und 31 haben gleiche Zähnezahlen, die halb so groß sind wie die Zähnezahl des Zahnrades 25. Eine Kette 32 umschlingt das Zahnrad 25, die beiden Ritzel 30 und 31 sowie mehrere freidrehbare Kettenräder 33, von denen sie umgelenkt und gespannt gehalten wird.

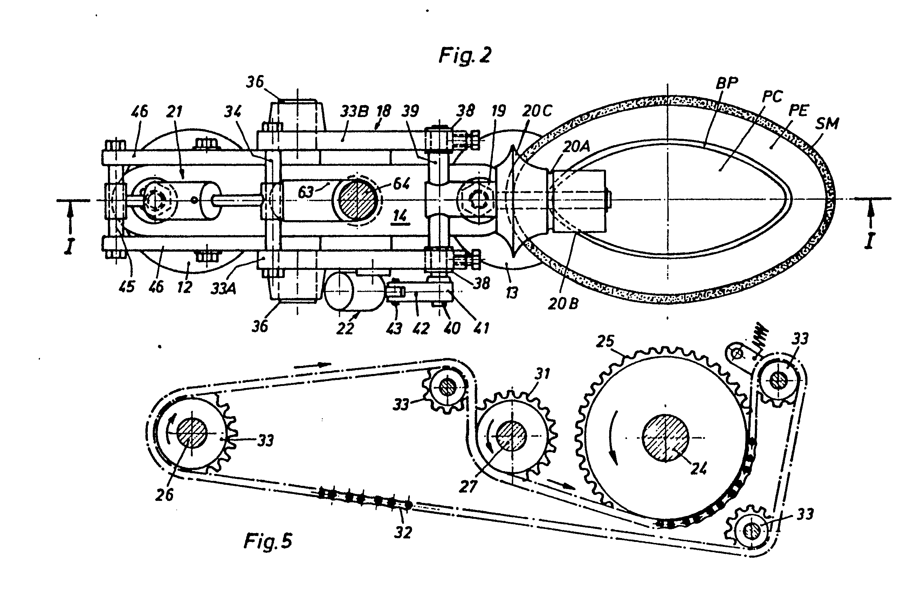

Der Ausleger 18 des Werkzeugständers 15 ist gemäß Fig. 1 und 2 aus zwei parellelen senkrechten Platten 33A und 33B zusammengesetzt, die durch einen hinteren Querbolzen 34 und zwei vordere Querbolzen 35 miteinander verbunden sind. Eine weitere Verbindung der beiden Platten 33A und 33B miteinander ist durch ein Kipplager 36 gebildet, das den Ausleger 18 mit dem Basisteil 16 verbindet und sich waagerecht im rechten Winkel zum Koppelglied 14 erstreckt.

Die beiden Platten 33A und 33B haben vorne je ein im wesentlichen senkrechtes Langloch 37. Die Langlöcher 37 liegen einander gegenüber und nehmen je einen Lagerblock 38 auf der höheneinstellbar und festklemmbar ist. In den beiden Lagerblöcken 38 ist eine waagerechte Welle 39 gelagert, an deren einem Ende 40 ein Ende 41 einer Kurbel 42 befestigt ist. Mit dem anderen Ende 43 der Kurbel 42 ist die Kolbenstange 44 der doppeltwirkenden pneumatischen Kolben-Zylinder-Einheit 22 verbunden. Der Zylinder dieser Einheit 22 ist an der Platte 33A des Auslegers 18 gelagert.

Die andere Kolben-Zylinder-Einheit 21 verbindet einen Querbolzen 45 am hinteren oberen Ende 46 des Basisteils 16 mit dem hinteren Querbolzen 34 zwischen den beiden Platten 33A und 33B des Auslegers 18. Die beiden Kolben-Zylinder-Einheiten 21 und 22 werden von einer nicht dargestellten gemeinsamen Steuerung zeitlich aufeinander abgestimmt betätigt.

Auf der hinteren Steuerscheibe 12 ist ein Schlitten 50 diametral verstellbar geführt und mit einer Klemmvorrichtung 51 feststellbar. Auf dem Schlitten 50 ist ein senkrechter Achszapfen 52 befestigt.

In entsprechender Weise ist auf der vorderen Steuerscheibe 13 ein Schlitten 55 diametral verstellbar geführt und mit einer Klemmvorrichtung 56 feststellbar; auf dem Schlitten 55 ist ein senkrechter Kurbelzapfen 57 befestigt.

Die beiden-Zapfen 52 und 57 sind unabhängig voneinander exzentrisch in Bezug auf die zugehörige Welle 26 bzw. 27 einstellbar. Die Gefahr einer Verklemmung infolge von Ungenauigkeiten der Herstellung oder Einstellung von Teilen der Getriebeanordnung 23 ist dadurch vermieden, daß der Achszapfen 52 in einem Langloch 60 am hinteren Teil 61 des Koppelgliedes 14 geführt ist. Das Koppelglied 14 ist jedoch mit seinem vorderen Ende 62A am vorderen Zapfen 57 spielfrei mittels einer Büchse 62 gelagert.

Als Einstellhilfe weist das Koppelglied 14 in seinem mittleren Bereich ein weiteres Langloch 63 auf, in das eine senkrechte Stange 64 eingreift. Die Stange 64 ist in einem Langloch des Maschinengestells 10 einstellbar befestigt; die Mittellinie dieses Langlochs liegt in der selben senkrechten Ebene wie die geometrischen Achsen der Werkstückspindel 24 und der beiden Wellen 26 und 27.

Eine weitere Einstellmöglichkeit ergibt sich dadurch, daß das Basisteil 16 des Werkzeugständers 15 nahe seinem unteren Rand Langlöcher 65 aufweist, die sich in Längsrichtung des Koppelgliedes 14 erstrecken und je eine lösbare Befestigungsschraube 66 aufnehmen.

Die folgende Beschreibung der Wirkungsweise der in Fig. 1 bis 5 dargestellten Maschine setzt voraus, daß auf den Werkstückträger 11 die patrizenartige Form SM aufgelegt worden ist, die zu der in Gebrauchslage oberen Seite des herzustellenden ovalen Geschirrteils FF komplementär ist. Auf die Form SM wird ein sogenanntes Blatt aus der zu formenden Masse als Werkstück FF aufgelegt, wobei der Ausleger 18 des Werkzeugständers 15 und die verstellbare Werkzeugspindel 19 samt Formgebungskopf 20 die Stellungen einnehmen, die in Fig. 1 mit gestrichelten Linien angedeutet sind. Nun wird der Antriebsmotor der Maschine in Gang gesetzt, der das Zahnrad 25 und von dort aus über die Getriebeanordnung 23 auch die Ritzel 30 und 31 dreht, wodurch der Werkzeugträger 11 sowie die Steuerscheiben 12 und 13 gedreht werden; wegen der beschriebenen Durchmesser - bzw. Zähnezahlverhältnisse drehen sich die Steuerscheiben 12 und 13 mit der doppelten Drehzahl des Werkstückträgers 11.

Sobald der Motor in Gang gesetzt ist, wird der Formgebungskopf 20 auf das Werkstück FF abgesenkt indem zunächst die pneumatische Einheit 21 ausgefahren wird, wodurch der Ausleger 18 um das Kipplager 36 im Uhrzeigersinn bezogen auf Fig. 1 gekippt wird. Anschließend wird durch Ausfahren der pneumatischen Einheit 22 die Welle 39 ebenfalls im Uhrzeigersinn gedreht, wodurch die Werkzeugspindel 19 samt Formgebungskopf 20 entsprechend gekippt wird.

Auf diese Weise trifft der Formgebungskopf 20 auf das Werkstück FF zunächst schräg auf, wie mit gestrichelten Linien angedeutet; anschließend, nach einer bestimmten Anzahl Umdrehungen des Werkstückträgers 11, nimmt der Formgebungskopf 20 die in Fig. 1 mit vollen Linien gezeichnete waagerechte Stellung ein.

Durch die Drehung des Werkstückträgers 11 wird der beim Ausführungsbeispiel gemäß Fig. 1 bis 5 freidrehbare Formgebungskopf 20 mitgedreht. In seiner waagerechten Stellung modelliert der Formgebungskopf 20 den unteren Teil des Werkstücks FF mit der Rippe BP, die als Fuß des Geschirrteils von einer ringförmigen Nut 20A des Formgebungskopfes 20 ausgeformt wird.

Die Nut 20A trennt einen den ebenen mittleren Bereich PC des Werkstücks FF formenden zylindrischen Teil 20B des Formgebungskopfes 20 von einer kegelstumpfförmigen Schürze 20C, die den äußeren Teil PE des Werkstücks FF ausformt.

Die zweistufige Absenkung des Formgebungskopfes 20 bewirkt, daß das bildsame Material des ursprünglich blattförmigen Werkstücks FF nach außen und unten fließt, wodurch die Ausformung begünstigt wird.

In diesem Zusammenhang ist die wesentliche Verbesserung zu beachten, die sich aus der zusammengesetzten Bewegung des Koppelgliedes 14 ergibt, an dem das Basisteil 16 des Werkzeugständers 15 befestigt ist. Diese Bewegung ergibt sich aus der Anordnung der Steuerscheiben 12 und 13 und dem Übersetzungsverhältnis 1: 2 zwischen dem Zahnrad 25 und dem Paar Ritzel 30 und 31, wodurch jeder vollen Umdrehung des Werkstückträgers 11 zwei volle Umdrehungen der Steuerscheiben 12 und 13 entsprechen. Mit anderen Worten drehen sich die Steuerscheiben 12 und 13 um je 90°, während sich das Zahnrad 25 um 45° dreht.

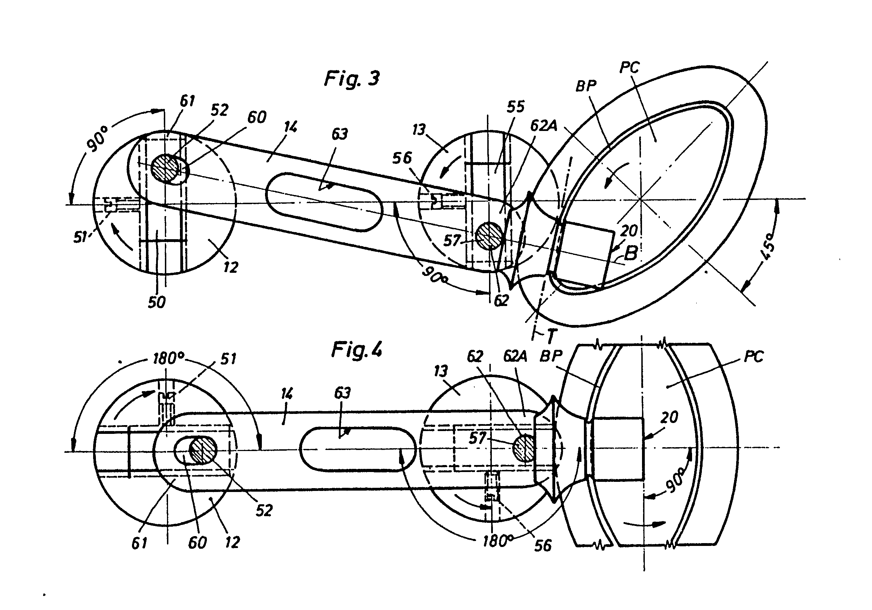

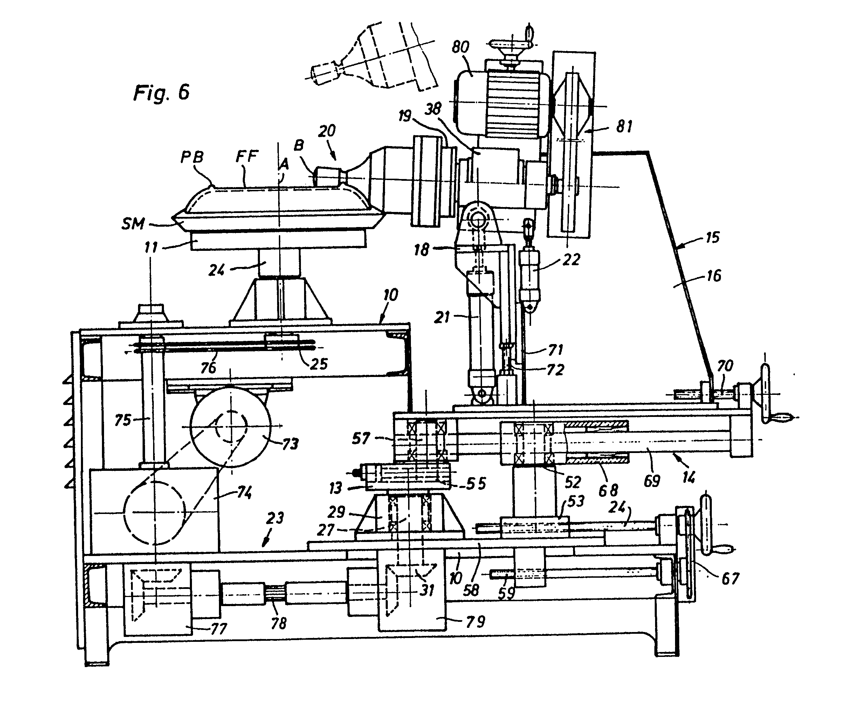

Zwei Stellungen des Werkstücks FF in Bezug auf den Formgebungskopf 20 sind in Fig. 3 und 4 abgebildet. Die zusammengesetze Rotations- und Translationsbewegung des Koppelgliedes 14 ergibt sich, wie deutlich dargestellt, aus der phasenverschobenen Drehbewegung der Steuerscheiben 12 und 13 und der Anordnung des Langlochs 60 und bewirkt, daß die Drehachse B des Formgebungskopfes 20 sich normal, also im rechten Winkel, zur Tangente T an die geometrische Kurve erstreckt, die durch den Rand BP an allen dessen Punkten bestimmt ist. Dies hat sich als unerläßliche Voraussetzung für eine genaue Ausformung des Unterteils des herzustellenden Werkstücks FF erwiesen. Bei Maschinen nach dem Stand der Technik, bei denen die beschriebene Rechtwinkligkeit nicht verwirklicht ist, verquetscht die Schürze 20C des Formgebungskopfes 20 entweder den äußeren Teil PE oder den Fußrand BP der herzustellenden Platte.

Auf der erfindungsgemäßen Maschine könne auch Geschirrteile anderer als der in den beigefügten Zeichnungen dargestellten Formen und Abmessungen gefertigt werden. Um dies zu ermöglichen, genügt es, die Stellungen der Schlitten 50 und 55, die Relativstellung der Werkstückspindel 24 in Bezug auf die Wellen 26 und 27 der Steuerscheiben 12 und 13 sowie das Übersetzungsverhältnis der Getriebeanordnung 23 zu verändern.

Um die Relativstellungen der Wellen 24, 26 und 27 verändern zu können, ist es nötig, die Lager 28 und 29 auf Bauteilen anzuordnen, die am Maschinengestell 10 längsverstellbar sind. Für die Veränderung des Übersetzungsverhältnisses zwischen dem Zahnrad 25 und den Ritzeln 30 und 31 ist es hingegen nötig, in bekannter Weise in die Getriebeanordnung 23 ein entsprechendes einstellbares Getriebe einzubauen.

Eine weitere Möglichkeit, die Parameter der Einwirkung auf das Werkstück FF zu ändern, besteht schließlich in einer Verstellung des Basisteils 16 des Werkzeugständers 15 in Bezug auf das Koppelglied 14. Durch eine solche Verstellung ergibt sich eine entsprechende Verlagerung des Formgebungskopfes 20 in Bezug auf den Werkstückträger 11.

Die erfindungsgemäße Maschine läßt sich mit entsprechend geändertem Formteil SM und Formgebungskopf 20 auch zum Drehen der Oberseite von Geschirrteilen verwenden.

Bei der in Fig. 1 bis 5 dargestellten Maschine sind die Begriffe Achszapfen 52 und Kurbelzapfen 57 gegeneinander austauschbar, da jeder dieser beiden für die kombinierten Schwenkungen und Verschiebungen des Koppelgliedes 14 verantwortlichen Zapfen exzentrisch einstellbar ist.

Anders ist dies bei der in Fig. 6 dargestellten Maschine, bei der nur ein Zapfen als Kurbelzapfen 57 in Bezug auf die zugehörige Steuerscheibe 13 exzentrisch einstellbar ist und somit im Betrieb Kreise von mehr oder weniger großem Durchmesser beschreibt, während der andere Zapfen als reiner Achszapfen 52 im Betrieb ortsfest ist. In Fig. 6 sind jedoch zusätzliche Einstellmöglichkeiten dargestellt, die im Zusammenhang mit Fig. 1 bis 5 schon erwähnt, dort aber nicht dargestellt sind. Der Achszapfen 52 ist auf einem Schlitten 53 befestigt, der mittels einer handbetätigten Gewindespindel 54 längs einer gemeinsamen Normalen des Achszapfens 52, der Welle 27 und der Werkstückspindel 24 verstellbar ist.

Der Schlitten 53 ist auf einem weiteren Schlitten 58 geführt, der mittels einer Gewindespindel 59 in der gleichen Richtung wie der Schlitten 53 verstellbar ist und das Lager 29 der Steuerwelle 27 trägt. Die beiden Gewindespindeln 54 und 59 haben gleichgroße Steigungen und sind durch einen Kettentrieb 67 derart miteinander verbunden, daß die Gewindespindel 59 bei jeder vollen Umdrehung der Gewindespindel 54 nur eine halbe Umdrehung ausführt; bei jeder Verstellung des Achszapfens 52 in der einen oder anderen Richtung wird also die Steuerwelle 27 in gleicher Richtung, jedoch nur halb so weit, verstellt.

Die Maschine gemäß Fig. 6 unterscheidet sich von der in Fig. 1 bis 5 dargestellten ferner dadurch, daß auf dem senkrechten Achszapfen 52 eine waagerechte Büchse 68 gelagert ist, in der eine zum Koppelglied 14 gehörige, in dessen Längsrichtung angeordnete zylindrische Stange 69 verschiebbar geführt ist. Das Basisteil 16 des Werkzeugständers 15 ist mittels einer handbetätigten Gewindespindel 70 in Längsrichtung der Koppel 14 einstellbar. Am Basisteil 16 ist eine senkrechte Führung 71 ausgebildet, die den in diesem Fall schlittenartig gestalteten Ausleger 18 führt. Dementsprechend ist die Kolben-Zylinder-Einheit 21 dazu vorgesehen, den Ausleger 18 senkrecht zu verschieben. Als Begrenzung für die Abwärtsbewegung des Auslegers 18 ist eine Anschlagschraube 72 vorgesehen.

Eine weitere Abweichung der Maschine gemäß Fig. 6 von der in Fig. 1 bis 5 dargestellten besteht darin, daß die Werkstückspindel 24 nicht unmittelbar mit einem Motor gekuppelt ist, sondern ein in Fig. 6 dargestellter Motor 73 über ein stufenlos einstellbares Getriebe 74 eine senkrechte Welle 75 antreibt, die durch einen Kettentrieb 76 mit dem Zähnezahlverhältnis 1 : 2 mit der Werkstückspindel 24 verbunden ist und ferner über einen Winkeltrieb 77, eine Teleskopwelle 78 und einen weiteren Winkeltrieb 79 im Verhältnis 1 : 1 mit der Steuerwelle 27 verbunden ist. Das Übersetzungverhältnis der gesamten Getriebeanordnung 23 ist also wiederum so, daß bei jeder vollen Umdrehung des Werkstückträgers 11 die Steuerscheibe 13 samt Kurbelzapfen 57 zwei volle Umdrehungen ausführt. Schließlich unterscheidet sich die Maschine gemäß Fig. 6 von der in Fig. 1 bis 5 dargestellten dadurch, daß der Formgebungskopf 20 von einem eigenen Motor 80 über ein stufenlos einstellbares Getriebe 81 antreibbar ist.

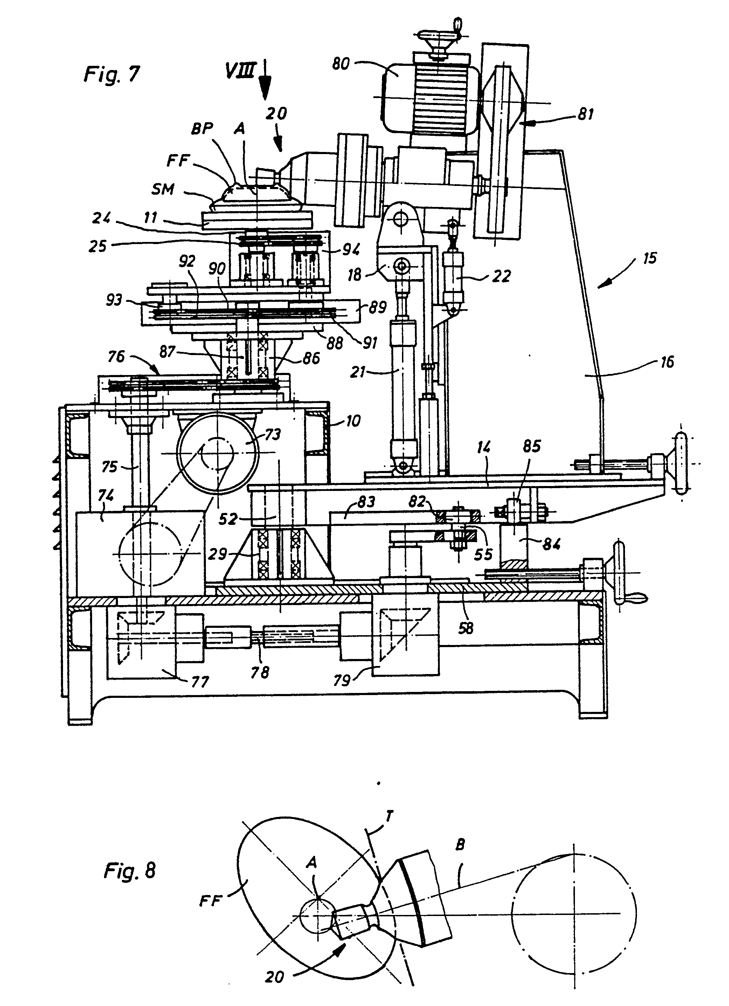

Die Maschine gemäß Fig. 7 ist mit der in Fig. 6 dargestellten weitgehend gleich, unterscheidet sich von dieser jedoch in folgenden Merkmalen:

Das Koppelglied 14 ist fest auf dem senkrechten Achszapfen 52 gelagert, dessen Lager 29 jedoch wie in Fig. 6 auf einem Schlitten 58 angeordnet ist. Auf dem Kurbelzapfen 55 ist eine Rolle 82 gelagert, die in einer Längsnut 83 des Koppelgliedes 14 geführt ist. Auf dem Schlitten 58 ist eine mit dem Lager 29 gleichachsig bogenförmige Führung 84 befestigt, auf der sich das Koppelglied 14 mit einer an ihm gelagerten Rolle 85 abstützt.

Die Maschine gemäß Fig. 7 unterscheidet sich von der in Fig. 6 dargestellten ferner dadurch, daß der Kettentrieb 76 nicht unmittelbar die Werkstückspindel 24 antreibt, sondern eine Büchse 86, die auf einem am Maschinengestell 10 befestigten senkrechten Zapfen 87 gelagert ist und eine in Bezug auf den Zapfen 87 radiale Führung 88 trägt, an der ein Zwischengehäuse 89 verstellbar geführt ist. Am oberen Ende des ortsfesten Zapfens 87 ist ein Ritzel 90 befestigt, das mit einem am Zwischengehäuse 89 gelagerten Zahnrad 91 doppelt so großen Durchmessers durch eine Kette 92 verbunden ist, die zusätzlich um ein ebenfalls im Zwischengehäuse 89 gelagertes Kettenspannrad 93 geführt ist. Das Zahnrad 91 ist durch ein weiteres Kettengetriebe 94 mit der Werkstückspindel 24 verbunden, die in Bezug auf den senkrechten Zapfen 87 exzentrisch umläuft, während sie sich um ihre eigene Achse A dreht.

Gemäß Fig. 7 führt somit der Werkstückträger 11 zusätzlich zur Drehung um seine eigene Achse A eine Planeten-Bewegung aus, die in Fig. 8 mit einem Kreis angedeutet ist. Der Formgebungskopf 20 braucht die erforderlichen translatorischen Relativbewegungen in einer zur Achse A des Werkstückträgers 11 normalen Ebene nicht selber auszuführen; dementsprechend ist das Basisteil 16 des Werkzeugständers 15 nur noch pendelnd um den Achszapfen 52 hin- und herschwenkbar.

## Patentansprüche

1. Maschine zum Drehen unrunder Geschirrteile mit
- einem Werkstückträger (11), der um seine Achse (A) drehantreibbar und zum Aufnehmen eines Werkstücks (FF) ausgebildet ist,
- einem Formgebungskopf (20), der um seine Achse (B) drehbar an einem Werkzeugständer (15) gelagert und an das Werkstück (FF) auf dem Werkstückträger (11) andrückbar ist, und
- einer Getriebeanordnung (23) zum Erzeugen einer Relativbewegung zwischen Werkstückträger (11) und Formgebungskopf (20), die im wesentlichen radial zur Achse (A) des Werkstückträgers (11) hin- und hergeht und mit dessen Drehung entsprechend dem Umriß des Werkstücks (FF) abgestimmt ist,
dadurch gekennzeichnet, daß der Werkzeugständer (15) in einer zur Achse (A) des Werkstückträgers (11) zumindest annähernd normalen Ebene pendelnd beweglich und derart abgestimmt mit der im wesentlichen radial hin- und hergehenden Relativbewegung antreibbar ist, daß die Achse (B) des Formgebungskopfes (20) eine im Bereich von dessen Einwirkung auf das Werkstück (FF) an dieses gelegte Tangente (T) zumindest annähernd rechtwinklig kreuzt.

2. Maschine nach Anspruch 1, dadurch gekennzeichnet, daß der Werkzeugständer (15) an einem Koppelglied (14) befestigt ist, das einerseits mit einem Kurbelzapfen (57) der genannten Getriebeanordnung (23) und andererseits mit einem Achszapfen (52) gelenkig verbunden ist, und diese beiden Zapfen (57, 52) zur Achse (A) des Werkstückträgers (11) mindestens annähernd parallel sind.

3. Maschine nach Anspruch 2, dadurch gekennzeichnet, daß Kurbelzapfen (57) und Achszapfen (52) im rechten Winkel zu ihrer Achsrichtung einstellbar sind.

4. Maschine nach Anspruch 3, dadurch gekennzeichnet, daß Kurbelzapfen (57) und Achszapfen (52) mittels je eines diametral verstellbaren Schlittens (55, 50) an je einer Steuerscheibe (13, 12) befestigt sind und durch die genannte Getriebeanordnung (23) im Übersetzungsverhältnis 1 : 1 miteinander verbunden sind.

5. Maschine nach einem der Ansprüche 2 bis 4, zum Drehen ovaler Geschirrteile, dadurch gekennzeichnet, daß die Getriebeanordnung (23) zwischen Werkstückträger (11) und Kurbelzapfen (57) ein Übersetzungsverhältnis 1 : 2 aufweist.

## Claims

1. An oval dish forming apparatus comprising
- a workpiece support (11) adapted to be driven in rotation about its axis (A) and designed to receive a workpiece (FF),
- a shaping head (20) which is mounted to a tool post (15) so as to be rotatable about its own axis (B) and adapted to be pressed against the workpiece (FF) on the workpiece support (11), and
- a power transmission (23) for producing a relative movement between workpiece support (11) and shaping head (20) said movement being a reciprocating one in a substantially radial direction with respect to the axis (A) of the workpiece support (11) and being harmonized with the rotation of said support in accordance with the outline of the workpiece (FF),
characterized in
that the tool post (15) is adapted for rocking motion in a plane being at least approximately normal with respect to the axis (A) of the workpiece support (11) and is adapted to be driven, harmonized with the substantially radially reciprocating relative movement in such a manner that the axis (B) of the shaping head (20) crosses at an at least approximately right angle, a tangent (T) applied to the workpiece (FF) in the area there onto which said shaping head acts.

2. The apparatus as defined in claim 1, characterized in
that the tool post (15) is secured to a linkage member (14) which is articulated on the one hand to a crank pin (57) of the power transmission (23) referred to, and on the other hand to an axle pin (52), and that the said two pins (57, 52) extend at least approximately in parallel with the axis (A) of the workpiece support (11).

3. The apparatus as defined in claim 2, characterized in
that the crank pin (57) and the axle pin (52) are adapted to be adjusted at a right angle with respect to the direction of their respective axis.

4. The apparatus as defined in claim 3, characterized in
that the crank pin (57) and the axle pin (52) are each secured to a plate cam (13, 12) by means of a diametrically adjustable slide (55, 50) and are connected with each other via the power transmission (23) referred to, in a transmission ratio of 1 : 1.

5. The apparatus as defined in any one of claims 2 to 4, for forming oval dishes, characterized in
that the power transmission (23) has a transmission ratio of 1 : 2 between workpiece support (11) and crank pin (57).

## Revendications

1. Machine pour tourner des articles de vaisselle non circulaires, comportant:
- un support de pièce (11) qui peut être entraîné en rotation autour de son axe (A) et qui est agencé pour recevoir une pièce (FF),
- une tête de profilage (20) qui est montée sur un porte-outil (15) de façon à pouvoir tourner autour de son axe (B) et qui peut être appliquée contre la pièce (FF) placée sur le support de pièce (11), et

- un mécanisme de transmission (23) pour produire un mouvement relatif entre le support de pièce (11) et la tête de profilage (20), qui est déplacé sensiblement alternativement et radialement par rapport à l'axe (A) du support de pièce (11) et dont la rotation est adaptée en correspondance au contour de la pièce (FF),

caractérisée en ce que le porte-outil (15) peut être entraîné pour exécuter un mouvement pendulaire dans un plan au moins approximativement perpendiculaire à l'axe (A) du support de pièce (11) et qui est synchronisé avec le mouvement relatif de va et vient sensiblement radial de telle sorte que l'axe (B) de la tête de profilage (20) coupe au moins approximativement à angle droit une tangente (T) à la pièce (FF) dans la zone de son action sur la pièce.

2. Machine selon la revendication 1, caractérisée en ce que le porte-outil (15) est fixé sur un organe d'accouplement (14) qui est relié de façon articulée d'un côté avec un tourillon de manivelle (57) du mécanisme de transmission (23) précité et de l'autre côté avec un tourillon axial (53) et ces deux tourillons (57, 52) sont au moins approximativement parallèles à l'axe (A) du support de pièce (11).

3. Machine selon la revendication 2, caractérisée en ce que le tourillon de manivelle (57) et le tourillon axial (52) sont réglables à angle droit par rapport à leur direction axiale.

4. Machine selon la revendication 3, caractérisée en ce que le tourillon de manivelle (57) et le tourillon axial (52) sont chacun fixes au moyen d'un chariot (55, 50) déplaçable diamétralement sur un disque de commande respectif (13, 12) qui sont reliés entre eux, par l'intermédiaire du mécanisme de transmission (23) précité, avec un rapport de transmission de 1: 1.

5. Machine selon une des revendications 2 à 4, pour tourner des articles de vaisselle ovales, caractérisée en ce que le mécanisme de transmission (23) prévu entre le support de pièce (11) et le tourillon de manivelle (57) a un rapport de transmission de 1 : 2.

Fig.1

Fig.2

Fig.5

Fig. 3

Fig. 4

Fig. 6

Fig. 7

Fig. 8